# EUROPÄISCHE PATENTSCHRIFT

(11) **EP 4 256 949 B1**
(45) Veröffentlichungstag und Bekanntmachung des Hinweises auf die Patenterteilung: **04.03.2026**
(21) Anmeldenummer: 23166659.5
(22) Anmeldetag: 05.04.2023
(51) Int. Cl.: A01G 9/12

(54) **PFLANZENSTÜTZGITTER**
PLANT SUPPORT GRID
GRILLE DE SUPPORT DE PLANTES

(30) Priorität: 07.04.2022 DE 202022101866 U; 19.05.2022 DE 102022112571
(43) Veröffentlichungstag der Anmeldung: 11.10.2023
(73) Patentinhaber: Pöppelmann Holding GmbH & Co. KG, 49393 Lohne (DE)
(72) Erfinder: Orschulik, Günther, 49451 Holdorf (DE); Punte, Bastian, 49434 Neuenkirchen (DE); Nuxoll, Christian, 49413 Dinklage (DE)

(56) Entgegenhaltungen:
- DE-C1- 3 739 947
- DE-U1- 20 301 004

## Beschreibung

Aus der DE 3400838 A1 ist ein Pflanzenhalter in Form eines Pflanzenstützgitters bekannt, welches aus mehreren Stützringen und Stützstangen gebildet ist und sich mit fußseitig und radial innen an den Stützstangen angeordneten Vorsprüngen auf einem oberen Topfrand eines Pflanztopfes abstützt, wobei ein darunter angeordneter Haltering unterhalb einer Topfschulter an der Topfwand anliegt. Das filigrane aus einem Kunststoff spritzgegossene Stützgitter weist zwar eine stapelfähige stumpfkegelige Grundform auf. Die gebildeten Stapel sind aber instabil, da sich die Stützgitter innerhalb eines Stapels zueinander verdrehen können und infolgedessen ineinander verhaken, wodurch auch das Entstapeln erschwert ist.

Die DE 3739947 C1 offenbart einen gattungsgemäßen Pflanzenstützkorb gleicher Bauart, wobei ein elastisch aufweitbarer Haltering in Form zickzackförmiger Ausbiegungen vorgesehen ist. Der Haltering ist über kollinear zu den Stützstangen verlaufende Verbindungslaschen mit dem fußseitigen und einen jeweiligen Rastvorsprung aufweisenden Ende der Stützstangen verbunden.

In der CA 2510412 A1 ist ein quadratischer Pflanztopf dargestellt und beschrieben, bei dem sich die eckseitigen Teile der Seitenwand über den horizontalen Rand des Behälters hinaus nach oben erstrecken und so Verlängerungen mit einem einfach gewinkelten, offenen Profilquerschnitt bilden, die zur Unterstützung von Pflanzen verwendet werden können.

Aufgabe der vorliegenden Erfindung ist es, ein an Pflanztöpfen tragfähig festlegbares Pflanzenstützgitter bereitzustellen, welches eng geschachtelt gestapelt werden kann und sich einwandfrei entstapeln lässt.

Die Aufgabe wird von einem Pflanzenstützgitter nach dem Anspruch 1 gelöst. Vorteilhafte Ausgestaltungen der Erfindung sind den auf diesem Anspruch rückbezogenen Unteransprüchen sowie der nachfolgenden Vorteils- und Figurenbeschreibung zu entnehmen.

Erfindungsgemäß ist vorgesehen, dass die zueinander in stumpfkegeliger Weise herunterragenden Stützstangen jeweils einen Profilkörper mit einem gekrümmten und/oder zumindest einfach gewinkelten, offenen Profilquerschnitt aufweisen und der Haltering zwischen den Stützstangen verlaufende Halteringabschnitte aufweist, die über radial innen versetzte Haltebrücken zum geschlossen umlaufenden Haltering verbunden sind.

Durch die seitlich zum Profilkörper weiter herunterragende Lasche weist das fußseitige Ende des Profilkörpers einen Abstand zum Haltering auf und bildet das Rastmittel aus, über das sich die zumindest drei Stützstangen gegen den oberen Topfrand abstützen. Der Profilkörper erstreckt sich von seinem Fußende vorzugsweise geradlinig zum oberen Stützring, wobei die Stützstangen leicht auseinanderlaufen und dem Stützgitter die Grundform eines auf dem Kopf stehenden Kegelstumpfs verleihen. Dabei stellt der gekrümmte und/oder zumindest einfach abgewinkelte, offene Profilquerschnitt des Profilkörpers der Stützstangen eine Führung bereit, worüber ineinander geschachtelte Stützgitter in gleicher Ausrichtung zueinander verdrehgesichert in einem stabilen Stapel gestapelt werden können. Die Führung verhindert insbesondere, dass beim händischen Auseinanderziehen der Stützgitter aus dem Stapelverbund, die einzelnen Stützgitter miteinander verhaken. Der geschlossen umlaufende Haltering, mit dem die Stützstangen über die Laschen verbunden sind, gewährleistet eine stabile und insbesondere tragfähige Anordnung des Stützgitters an dem Pflanztopf, indem er nämlich verhindert, dass sich die Stützstangen und insbesondere unter dem Topfrand oder einer Topfschulter anliegende Halteelemente aufbiegen und sich vom Pflanztopf lösen. Somit kann auch ein schwer bepflanzter Pflanztopf über das Pflanzenstützgitter getragen werden.

Der Haltering weist zwischen den Stützstangen verlaufende Halteringabschnitte auf, die über radial innen versetzte Haltebrücken zum geschlossen umlaufenden Haltering verbunden sind. Die radial innen versetzten Haltebrücken lassen in dem Haltering wenigstens die in einer Stapelrichtung auf den Haltering projizierten Profilquerschnitte der einzelnen Stützstangen frei, sodass gleiche Stützgitter in einem geringen Abstand ineinander geschachtelt gestapelt werden können und außerdem eine Herstellung in einem einfachen Auf-Zu-Spritzgusswerkzeug ermöglicht wird. Die Haltebrücken können von schmalen Stegen oder Bändern gebildet sein.

Vorzugsweise sind die Haltebrücken über Filmscharniere an den Halteringabschnitten angebunden, sodass sie jeweils aus einer von den Halteringabschnitten aufgespannten Ebene in eine schräg dazu stehende Ebene und zurück verschwenkbar sind. Die radial breiter und somit stabiler ausformbaren und gegenüber den Halteringabschnitten radial innen vorstehenden Haltebrücken klappen beim Hochziehen des Stützgitters am eingesetzten Pflanztopf auf einfache Weise nach unten, sodass das Stützgitter schnell und leicht in seine Endstellung gezogen werden kann, in der die Stützstangen mit ihrem fußseitigen Ende ihres Profilkörpers auf dem Topfrand aufliegend einrasten und der Haltering mit seinen Halteringabschnitten und den nach unten geklappten Haltebrücken an der Topfwand, vorzugsweise unter einer Topfschulter anliegt.

In bevorzugter Weiterausgestaltung ist vorgesehen, dass der offene Profilquerschnitt der Stützstangen bezüglich des stumpfkegeligen Pflanzenstützgitters nach außen geöffnet ist, womit ein pfeilartig nach innen gerichteter einteiliger Profilabschnitt als Rastvorsprung und auf dem Topfrand aufliegendes Auflager vorliegt.

In bevorzugter Weiterausgestaltung ist vorgesehen, dass die zumindest eine Lasche eine zum Profilkörper beabstandete Rippe aufweist, sodass sich eine Aufnahmenut ausbildet, in der ein flacher oder U-förmig profilierter Topfrand aufgenommen und insbesondere getragen werden kann. Somit kann das Stützgitter auch an Pflanztöpfen verwendet werden, die ohne oder mit einer allenfalls schwach ausgeprägten Topfschulter versehen sind. Der nicht mit einer Rippe versehene Abschnitt der Bänder bildet gleichsam ein Scharnier aus, über das die Stützstangen bei der Montage des Pflanzenstützgitters gegenüber dem geschlossen umlaufenden Haltering nach außen aufbiegen können.

In bevorzugter Weiterausgestaltung ist vorgesehen, dass die Stützstangen jeweils durch zwei auf gegenüberliegenden Seiten des Profilkörpers weiter herunterragende Laschen mit dem Haltering verbunden sind. Hierdurch ist ein geschlossenes Dreieck gebildet aus den vom fußseitigen Ende des Profilkörpers seitlich und vorzugsweise gespreizt herunterragenden Laschen und der eine Aussparung in dem Haltering ausbildenden Haltebrücke.

In bevorzugter Weiterausgestaltung ist vorgesehen, dass sich der Profilquerschnitt des Profilkörpers der Stützstangen in Profillängsrichtung zumindest im unteren Abschnitt zum fußseitigen Ende hin stetig vergrößert, sodass am fußseitigen Ende des Profilkörpers ein ausreichend großes Auflager zur Abstützung der Stützstangen an dem Topfrand vorliegt.

In bevorzugter Weiterausgestaltung ist vorgesehen, dass zumindest ein weiterer Stützring mit dem Profilkörper der Stützstangen unter Offenlassen des offenen Querschnittprofils verbunden ist, sodass eine durchgängige gegenseitige Führung von zu stapelnden bzw. zu entstapelnden Stützgittern gegeben ist.

In bevorzugter Weiterausgestaltung sind unter dem Stützring und vorzugsweise im Profilraum des Profilkörpers der Stützstangen Stapelstege angeformt.

In bevorzugter Weiterausgestaltung ist vorgesehen, dass der Stützring in Umlaufrichtung ein vorzugsweise nach unten offenes U-Profil aufweist, welches sich angenehm tragen lässt und außerdem eine entsprechend hohe Steifigkeit aufweist.

In bevorzugter Weiterausgestaltung ist vorgesehen, dass der Haltering in Umlaufrichtung zumindest abschnittsweise ein Winkelprofil aufweist, wodurch sich der Biegewiderstand zumindest in den zwischen den Stützstangen liegenden Halteringabschnitten vergrößert.

In bevorzugter Weiterausgestaltung ist vorgesehen, dass der Haltering mehrere, über den Umfang verteilt angeordnete Anlagenocken aufweist, welche sich besser an einen in dünner Wandstärke aus Kunststoff hergestellten Pflanztopf anlegen können als ein durchgehender Anlageabschnitt.

Weitere Vorteile und Einzelheiten der Erfindung sind der nachfolgenden Figurenbeschreibung zu entnehmen. Einzelne technische Merkmale des nachfolgend beschriebenen Ausführungsbeispiels können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden. Sofern sinnvoll, werden funktionell gleichwirkende Elemente mit identischen Bezugsziffern versehen. Es zeigen
- Fig. 1: ein an einem Pflanztopf angeordnetes Pflanzenstützgitter;
- Fig. 2: ein Detail des Pflanzenstützgitters;
- Fig. 3: eine Stapelanordnung mehrerer Pflanzenstützgitter.

Das Pflanzenstützgitter 1 ist an einem eine dünne Wandstärke aufweisenden Pflanztopf 2 aus Kunststoff angeordnet. Der kegelstumpfförmig ausgebildete Pflanztopf 2 weist eine konische Topfwand 21 auf, die sich von einem profilierten und mit Löchern versehenen Topfboden 22 aus zu einem kragenförmig umlaufenden Topfrand 23 erstreckt, wobei die Topfwand 21 im oberen Bereich mit einer Topfschulter 24 nach außen hin auskragt.

Das im Spritzguss aus Kunststoff hergestellte Pflanzenstützgitter 1 weist einen geschlossenen oberen Stützring 3 auf, von dem vier über den Umfang verteilt angeordnete, sich gegen den Topfrand 23 abstützende Stützstangen 4 herunterragen. Zwischen den Stützstangen angeordnete Stangen 12 und ein weiterer Stützring 13 vervollständigen das stumpfkegelig aufgespannte Gitter, mit dem eine im Pflanztopf 2 aufzuziehende Pflanze vollumfänglich gestützt werden kann.

Die Stützstangen 4 weisen ein radial außen offenes Winkelprofil als Profilkörper 10 auf, welches sich ausgehend vom Stützring 3 in Profillängsrichtung vergrößert und am fußseitigen Ende einen Rastvorsprung 11 als Auflager und zur Abstützung der Stützstangen 4 an dem Topfrand 23 ausbildet.

Die Stützstangen 4 sind durch zwei auf gegenüberliegenden Seiten und versetzt zum Profilkörper 10 weiter herunterragende, bandförmige Laschen 7 mit einem geschlossen umlaufenden Haltering 5 verbunden. Der Haltering 5 weist mehrere Anlagenocken 6 auf, über die sich der Haltering 5 unter der Topfschulter 24 an der Topfwand 21 anliegend abstützt. Der Haltering 5 ist gebildet aus zwischen den Stützstangen 4 verlaufenden und endseitig an den gespreizt herunterragenden Laschen 7 angebundenen, ein Winkelprofil 14 aufweisenden Halteringabschnitten 20, die über Haltebrücken 17 zum geschlossen umlaufenden Haltering 5 verbunden sind.

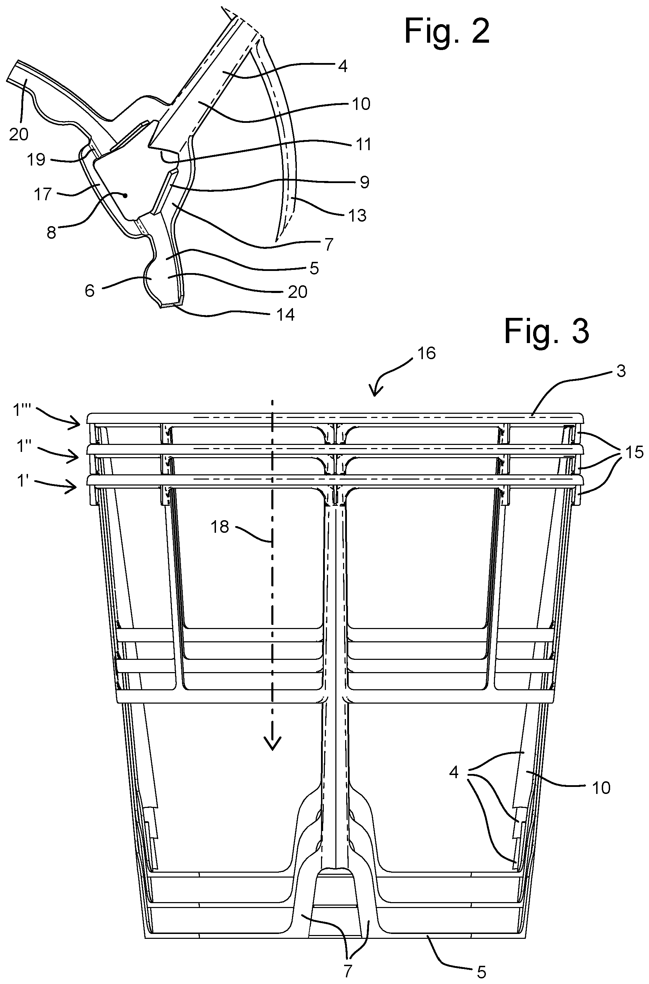

Die radial innen versetzten Haltebrücken 17 bilden Aussparungen 8 in dem Haltering 5 aus, die in Achsrichtung des stumpfkegeligen Pflanzenstützgitters 1 einen hinterschnittfreien Zugang zum radial außen offenen Winkelprofil des Profilkörpers 10 ermöglichen. Das Pflanzenstützgitter 1 kann hierdurch in einem einfachen, schieberfreien Auf-Zu-Spritzgusswerkzeug hergestellt werden. Außerdem können, wie in Fig. 3 gezeigt, gleiche Pflanzenstützgitter 1', 1" und 1‴ in einer zur Achsrichtung parallelen Stapelrichtung 18 ineinander geschachtelt gestapelt werden.

Die Pflanzenstützgitter 1', 1" und 1‴ sind dabei über ihre auf- bzw. ineinander liegenden Profilkörper 10 gegenseitig geführt und zueinander verdrehgesichert gehalten, sodass ein stabiler Stapel 16 gebildet ist. Ein gegenseitiger Stapelabstand ist von unter dem Stützring 3 und im Profilraum des Profilkörpers 10 der Stützstangen 4 angeformten Stapelstegen 15 definiert.

Die radial innen gegenüber dem weiteren Haltering 5 vorstehenden Haltebrücken 17 sind über Filmscharniere 19 an den Halteringabschnitten 20 angebunden, sodass sie bei der Montage des Pflanzenstützgitters 1 am Pflanztopf 2 aus der von den Halteringabschnitten 20 aufgespannten Ebene nach unten klappen können, in eine schräg dazu stehende Ebene, welche annähernd tangential zur konischen Topfwand 21 liegt.

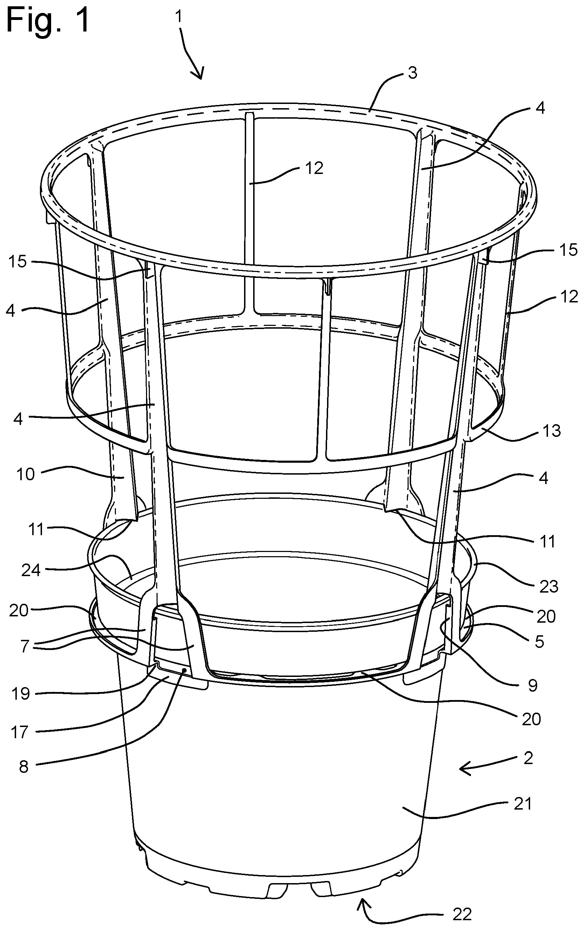

Das Pflanzenstützgitter 1 wird an einem bepflanzten Pflanztopf 2 in der Weise montiert, dass der Pflanztopf 2 von oben in das Pflanzenstützgitter 1 eingesetzt wird und das Pflanzenstützgitter 1 anschließend am Pflanztopf 2 hochgezogen wird, wobei die Stützstangen 4 durch den Topfrand 23 nach außen aufbiegen, bis sie mit dem fußseitigen Ende ihres Profilkörpers 10, nämlich dem Rastvorsprung 11 auf dem Topfrand 23 aufliegend einrasten (vergleiche Fig. 1). Bei der in Fig. 1 gezeigten Anordnung liegt der Haltering 5 mit den nach unten geklappten Haltebrücken 17 unter der Topfschulter 24 des Pflanztopfes 2 an, sodass die nunmehr gebildete Einheit aus Pflanztopf 2 und Pflanzenstützgitter 1 über das Pflanzenstützgitter 1 bzw. dessen Stützring 3 getragen werden kann, welcher mit einem angenehm zu greifenden U-Profil versehen ist.

Die Laschen 7 weisen zum Profilkörper 10 bzw. zum Rastvorsprung 11 beabstandete Rippen 9 auf, sodass sich eine Aufnahmenut zwischen den Rastvorsprüngen 11 und Rippen 9 ausbildet, in der der Topfrand 23 aufgenommen und insbesondere gehalten werden kann.

Somit kann das Pflanzenstützgitter 1 auch an Pflanztöpfen verwendet werden, die keine oder eine nur schwach ausgebildete Topfschulter 24 aufweisen. Der nicht mit einer Rippe 9 versehene Abschnitt der Laschen 7 bildet gleichsam ein Scharnier aus, über das die Stützstangen 4 bei der Montage des Pflanzenstützgitters 1 gegenüber dem geschlossen umlaufenden Haltering 5 nach außen aufbiegen können.

### Bezugszeichenliste

| | | | |
|---|---|---|---|
| 1 | Pflanzenstützgitter | 13 | Stützring |
| 2 | Pflanztopf | 14 | Winkelprofil |
| 3 | Stützring | 15 | Stapelstege |
| 4 | Stützstange | 16 | Stapel |
| 5 | Haltering | 17 | Haltebrücke |
| 6 | Anlagenocken | 18 | Stapelrichtung |
| 7 | Lasche | 19 | Filmscharnier |
| 8 | Aussparung | 20 | Halteringabschnitt |
| 9 | Rippe | 21 | Topfwand |
| 10 | Profilkörper | 22 | Topfboden |
| 11 | Rastvorsprung | 23 | Topfrand |
| 12 | Stange | 24 | Topfschulter |

## Patentansprüche

1. **Pflanzenstützgitter** (1) zur Anordnung an einem Pflanztopf (2), aufweisend zumindest einen Stützring (3), von dem zumindest drei Stützstangen (4) herunterragen, die sich mit fußseitigen Rastmitteln (11) gegen einen oberen Topfrand (23) abstützen, wobei die Stützstangen (4) über einen an einer Topfwand (21) zumindest teilweise anliegenden Haltering (5) verbunden sind, wobei die Stützstangen (4) über zumindest eine seitlich zum Profilkörper (10) weiter herunterragende Lasche (7) mit dem geschlossen umlaufenden Haltering (5) verbunden sind, **dadurch gekennzeichnet, dass** die zueinander in stumpfkegeliger Weise herunterragenden Stützstangen (4) jeweils einen Profilkörper (10) mit einem gekrümmten und/oder zumindest einfach gewinkelten, offenen Profilquerschnitt aufweisen und der Haltering (5) zwischen den Stützstangen verlaufende Halteringabschnitte (20) aufweist, die über radial innen versetzte Haltebrücken (17) zum geschlossen umlaufenden Haltering (5) verbunden sind.

2. Pflanzenstützgitter nach Anspruch 1, **dadurch gekennzeichnet, dass** die Haltebrücken (17) über Filmscharniere (19) an den Halteringabschnitten (20) angebunden und jeweils aus einer von den Halteringabschnitten (20) aufgespannten Ebene in eine schräg dazu stehende Ebene und zurück verschwenkbar sind.

3. Pflanzenstützgitter nach einem der Ansprüche 1 oder 2, **dadurch gekennzeichnet, dass** der offene Profilquerschnitt der Stützstangen (4) bezüglich des stumpfkegeligen Pflanzenstützgitters (1) nach außen geöffnet ist.

4. Pflanzenstützgitter nach einem der Ansprüche 1 bis 3, **dadurch gekennzeichnet, dass** die zumindest eine Lasche (7) eine zum Profilkörper (10) beabstandete Rippe (9) aufweist.

5. Pflanzenstützgitter nach einem der Ansprüche 1 bis 4, **dadurch gekennzeichnet, dass** die Stützstangen (4) jeweils durch zwei auf gegenüberliegenden Seiten des Profilkörpers (10) weiter herunterragende Laschen (7) mit dem Haltering (5) verbunden sind.

6. Pflanzenstützgitter nach einem der Ansprüche 1 bis 5, **dadurch gekennzeichnet, dass** sich der Profilquerschnitt des Profilkörpers (10) der Stützstangen (4) in Profillängsrichtung zumindest im unteren Abschnitt zum fußseitigen Ende stetig vergrößert.

7. Pflanzenstützgitter nach einem der Ansprüche 1 bis 6, **dadurch gekennzeichnet, dass** zumindest ein weiterer Stützring (13) mit dem Profilkörper (10) der Stützstangen (4) unter Offenlassen des offenen Querschnittprofils verbunden ist.

8. Pflanzenstützgitter nach einem der Ansprüche 1 bis 7, **gekennzeichnet durch** unter dem Stützring (3) und vorzugsweise im Profilraum des Profilkörpers (10) der Stützstangen (4) angeformte Stapelstege (15).

9. Pflanzenstützgitter nach einem der Ansprüche 1 bis 8, **dadurch gekennzeichnet, dass** der Stützring (3) in Umlaufrichtung ein vorzugsweise nach unten offenes U-Profil aufweist.

10. Pflanzenstützgitter nach einem der Ansprüche 1 bis 9, **dadurch gekennzeichnet, dass** der Haltering (5) in Umlaufrichtung zumindest abschnittsweise ein Winkelprofil aufweist.

11. Pflanzenstützgitter nach einem der Ansprüche 1 bis 10, **dadurch gekennzeichnet, dass** der Haltering (5) mehrere, über den Umfang verteilt angeordnete Anlagenocken (6) aufweist.

## Claims

1. A **plant support grid** (1) for arrangement on a plant pot (2), comprising at least one support ring (3) from which at least three support rods (4) project downwardly, which support themselves against an upper pot rim (23) by means of latching means (11) at the base end, wherein the support rods (4) are connected via a retaining ring (5) which rests at least partially against a pot wall (21), wherein the support rods (4) are connected to the closed circumferential retaining ring (5) via at least one tab (7) projecting further downwardly laterally relative to the profile body (10), **characterised in that** the support rods (4), which project downwardly relative to one another in a frustoconical manner, each have a profile body (10) with a curved and/or at least single-angled, open profile cross-section, and the retaining ring (5) has retaining ring sections (20) running between the support rods, which are connected via radially inwardly offset retaining bridges (17) to form the closed circumferential retaining ring (5).

2. Plant support grid according to claim 1, **characterised in that** the retaining bridges (17) are connected to the retaining ring sections (20) via living hinges (19) and are each pivotable out of a plane spanned by the retaining ring sections (20) into a plane oriented at an angle thereto, and back.

3. Plant support grid according to one of claims 1 or 2, **characterised in that** the open profile cross-section of the support rods (4) is open outwardly with respect to the frustoconical plant support grid (1).

4. Plant support grid according to any one of claims 1 to 3, **characterised in that** the at least one tab (7) has a rib (9) spaced apart from the profile body (10).

5. Plant support grid according to any one of claims 1 to 4, **characterised in that** the support rods (4) are each connected to the retaining ring (5) by two tabs (7) projecting further downwardly on opposite sides of the profile body (10).

6. Plant support grid according to any one of claims 1 to 5, **characterised in that** the profile cross-section of the profile body (10) of the support rods (4) increases continuously in the longitudinal profile direction at least in the lower section towards the base end.

7. Plant support grid according to any one of claims 1 to 6, **characterised in that** at least one further support ring (13) is connected to the profile body (10) of the support rods (4) while leaving the open cross-section profile open.

8. Plant support grid according to any one of claims 1 to 7, **characterised by** stacking webs (15) formed under the support ring (3) and preferably in the profile space of the profile body (10) of the support rods (4).

9. Plant support grid according to any one of claims 1 to 8, **characterised in that** the support ring (3) has a U-profile, preferably open downwardly, in the circumferential direction.

10. Plant support grid according to any one of claims 1 to 9, **characterised in that** the retaining ring (5) has an angled profile in the circumferential direction at least in sections.

11. Plant support grid according to any one of claims 1 to 10, **characterised in that** the retaining ring (5) has several abutment lugs (6) distributed around the circumference.

## Revendications

1. **Grille de support pour plantes** (1) destinée à être agencée au niveau d'un pot à fleurs (2), présentant au moins un anneau de support (3) d'où font saillie vers le bas au moins trois tiges de support (4) qui viennent en appui contre un bord supérieur de pot (23) par le biais d'éléments d'arrêt (11) côté pied, dans laquelle les tiges de support (4) sont reliées par un anneau de retenue (5) reposant au moins partiellement au niveau d'une paroi de pot (21), dans laquelle les tiges de support (4) sont reliées avec l'anneau de retenue (5) périphérique fermé par le biais d'au moins une patte (7) faisant saillie davantage vers le bas, latéralement par rapport au corps de profilé (10), **caractérisée en ce que** les tiges de support (4) qui font saillie vers le bas en formant un cône tronqué présentent respectivement un corps de profilé (10) ayant une section de profilé ouverte courbée et/ou au moins simplement coudée, et **en ce que** l'anneau de retenue (5) présente des segments d'anneau de retenue (20) qui s'étendent entre les tiges de support, et qui sont reliés à l'anneau de retenue (5) périphérique fermé par le biais de ponts de retenue (17) décalés radialement vers l'intérieur.

2. Grille de support pour plantes selon la revendication 1, **caractérisée en ce que** les ponts de retenue (17) sont reliés aux segments d'anneau de retenue (20) par des films-charnières (19) et peuvent respectivement pivoter depuis un plan passant par les segments d'anneaux de retenue (20) vers un plan en oblique par rapport à celui-ci, et inversement.

3. Grille de support pour plantes selon l'une des revendications 1 ou 2, **caractérisée en ce que** la section de profilé ouverte des tiges de support (4) est ouverte vers l'extérieur par rapport à la grille de support pour plantes (1) en forme de cône tronqué.

4. Grille de support pour plantes selon l'une des revendications 1 à 3, **caractérisée en ce que** la patte (7), au moins au nombre de une, présente un renfort (9) à distance du corps de profilé (10).

5. Grille de support pour plantes selon l'une des revendications 1 à 4, **caractérisée en ce que** les tiges de support (4) sont reliées à l'anneau de retenue (5) respectivement par deux pattes (7) faisant saille vers le bas sur les côtés opposés du corps de profilé (10).

6. Grille de support pour plantes selon l'une des revendications 1 à 5, **caractérisée en ce que** la section de profilé du corps de profilé (10) des tiges de support (4) augmente constamment dans le segment inférieur et jusqu'à l'extrémité côté pied.

7. Grille de support pour plantes selon l'une des revendications 1 à 6, **caractérisée en ce qu'**au moins un autre anneau de support (13) est relié au corps de profilé (10) des tiges de support (4) en ménageant le profilé de section ouvert.

8. Grille de support pour plantes selon l'une des revendications 1 à 7, **caractérisée par** des tiges d'empilement (15) formées sous l'anneau de support (3) et de préférence dans l'espace de profilé du corps de profilé (10) des tiges de support (4).

9. Grille de support pour plantes selon l'une des revendications 1 à 8, **caractérisée en ce que** l'anneau de support (3) présente, dans la direction périphérique, un profilé en U de préférence ouvert vers le bas.

10. Grille de support pour plantes selon l'une des revendications 1 à 9, **caractérisée en ce que** l'anneau de retenue (5) présente, dans la direction périphérique, au moins par segment, un profilé en angle.

11. Grille de support pour plantes selon l'une des revendications 1 à 10, **caractérisée en ce que** l'anneau de retenue (5) présente plusieurs cames de placement (6) réparties sur la circonférence.
